# EUROPÄISCHE PATENTSCHRIFT

(11) **EP 1 456 530 B1**
(45) Veröffentlichungstag und Bekanntmachung des Hinweises auf die Patenterteilung: **08.04.2009**
(21) Anmeldenummer: 02779116.9
(22) Anmeldetag: 20.09.2002
(51) Int. Cl.: F02M 57/06, F02B 19/10, F02F 1/24, F02M 61/14

(54) **BRENNSTOFFEINSPRITZVENTIL-ZÜNDKERZE-KOMBINATION**
FUEL INJECTION VALVE SPARK PLUG COMBINATION
COMBINAISON SOUPAPE D'INJECTION DE CARBURANT-BOUGIE D'ALLUMAGE

(30) Priorität: 06.12.2001 DE 10159910
(43) Veröffentlichungstag der Anmeldung: 15.09.2004
(73) Patentinhaber: ROBERT BOSCH GMBH, 70442 Stuttgart (DE)
(72) Erfinder: HERDEN, Werner, 70839 Gerlingen (DE); VOLZ, Dieter, 74080 Heilbronn (DE); WUERFEL, Gernot, 71665 Vaihingen/Enz (DE); MELSHEIMER, Anja, 70563 Stuttgart-Vaihingen (DE); SCHMITTINGER, Simon, 71272 Renningen (DE); NORGAUER, Rainer, 71634 Ludwigsburg (DE); DEPONTE, Rene, 71093 Weil im Schoenbuch (DE)
(74) Vertreter: Körfer, Thomas
(86) Internationale Anmeldenummer: PCT/DE2002/003552
(87) Internationale Veröffentlichungsnummer: WO 2003/050410

(56) Entgegenhaltungen:
- EP-A- 0 654 602
- GB-A- 637 584
- JP-A- 05 288 136
- US-A- 4 006 725
- US-A- 4 864 989
- US-A- 5 609 130
- US-A- 5 611 307

## Beschreibung

### Stand der Technik

Die Erfindung geht aus von einer Brennstoffeinspritzventil-Zündkerze-Kombination nach der Gattung des Anspruchs 1.

Aus der EP 0 661 446 Al ist ein Brennstoffeinspritzventil mit einer integrierten Zündkerze bekannt. Das Brennstoffeinspritzventil mit integrierter Zündkerze dient zum direkten Einspritzen von Brennstoff in den Brennraum einer Brennkraftmaschine und zum Zünden des in den Brennraum eingespritzten Brennstoffs. Durch die kompakte Integration eines Brennstoffeinspritzventils mit einer Zündkerze kann Einbauraum am Zylinderkopf der Brennkraftmaschine eingespart werden. Das bekannte Brennstoffeinspritzventil mit integrierter Zündkerze weist einen Ventilkörper auf, der zusammen mit einem mittels einer Ventilnadel betätigbaren Ventilschließkörper einen Dichtsitz bildet, an welchen sich eine an einer dem Brennraum zugewandten Stirnfläche des Ventilkörpers ausmündende Abspritzöffnung anschließt. Der Ventilkörper ist durch einen keramischen Isolationskörper von einem in den Zylinderkopf der Brennkraftmaschine einschraubbaren Gehäusekörper hochspannungsfest isoliert. An dem Gehäusekörper befindet sich eine Masseelektrode, um ein Gegenpotential zu dem mit Hochspannung beaufschlagten Ventilkörper zu bilden. Bei Beaufschlagung des Ventilkörpers mit einer ausreichenden Hochspannung erfolgt ein Funkenüberschlag zwischen dem Ventilkörper und der mit dem Gehäusekörper verbundenen Masseelektrode.

Bei dem bekannten Brennstoffeinspritzventil mit integrierter Zündkerze ist jedoch nachteilig, daß die Position des Funkenüberschlags bezüglich des von der Abspritzöffnung abgespritzten Brennstoffstrahls nicht definiert ist, da der Funkenüberschlag an einer nahezu beliebigen Stelle im seitlichen Bereich eines Vorsprungs des Ventilkörpers erfolgen kann. Eine sichere Zündung der sogenannten Strahlwurzel des von der Abspritzöffnung abgespritzten Brennstoffstrahls ist bei dieser bekannten Bauweise nicht mit der notwendigen Sicherheit möglich. Eine sichere und zeitlich exakt definierte Entflammung des Brennstoffstrahls ist jedoch für eine Schadstoffreduzierung unbedingt erforderlich. Ferner kann an der Austrittsöffnung des Brennstoffstrahls eine stetig fortschreitende Verrußung oder Verkokung auftreten, die die abgespritzte Strahlform beeinflußt.

Aus der GB 637 584 A ist eine Brennstoffeinspritzventil-Zündkerze-Kombination mit einem gemeinsamen Verbindungskörper bekannt. vorteile der Erfindung

Die erfindungsgemäße Brennstoffeinspritzventil-Zündkerze-Kombination mit den kennzeichnenden Merkmalen des unabhängigen Anspruchs 1 hat demgegenüber den Vorteil, daß der Kerzenstein und das Brennstoffeinspritzventil mit dem Verbindungskörper lösbar verbunden sind, das Brennstoffeinspritzventil mittels einer an einer der Zündkerze abgewandten Seite sich erstreckenden Befestigungsklammer in dem Verbindungskörper fixiert ist und die Befestigungsklammer einstückig mit dem Verbindungskörper ausgebildet ist., eine optimale Anordnung der Bauteile relativ zueinander bei einfacher Montage und geringem Platzbedarf der Anordnung gegeben ist.

Durch die in den abhängigen Ansprüchen aufgeführten Maßnahmen sind vorteilhafte Weiterbildungen und Verbesserungen der im Hauptanspruch angegebenen Brennstoffeinspritzventil-Zündkerze-Kombination möglich.

Vorteilhafterweise ist der Kerzenstein durch eine Schraubhülse oder einen Klemmring in seiner Aufnahmebohrung gesichert. Der Kerzenstein wird dabei in die jeweilige Halterung eingeschraubt oder eingeschoben.

Besonders vorteilhaft ist die Neigung der Längsachse des Kerzensteins gegenüber der Längsachse des Brennstoffeinspritzventils, da ein direktes Anspritzen der Zündkerze durch das Brennstoffeinspritzventil vermieden werden kann.

Von Vorteil ist auch, daß sowohl das Brennstoffeinspritzventil als auch die einzelnen Teile der Zündkerze, also der Kerzenstein und die Masseelektrode, unabhängig voneinander austauschbar sind, ohne den Verbindungskörper aus dem Zylinderkopf oder eines der anderen Bauteile entfernen zu müssen.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein erstes Ausführungsbeispiel einer erfindungsgemäßen Brennstoffeinspritzventil-Zündkerze-Kombination;
- Fig. 2A: einen schematischen Schnitt durch eine bekannte Brennstoffeinspritzventil-Zündkerze-Kombination;
- Fig. 2B: einen Schnitt durch den Verbindungskörper der Brennstoffeinspritzventil-Zündkerze-Kombination entlang der Linie IIB-IIB in Fig. 2A; und
- Fig. 3: einen schematischen Schnitt durch ein zweites Ausführungsbeispiel einer erfindungsgemäßen Brennstoffeinspritzventil-Zündkerze-Kombination.

### Beschreibung der Ausführungsbeispiele

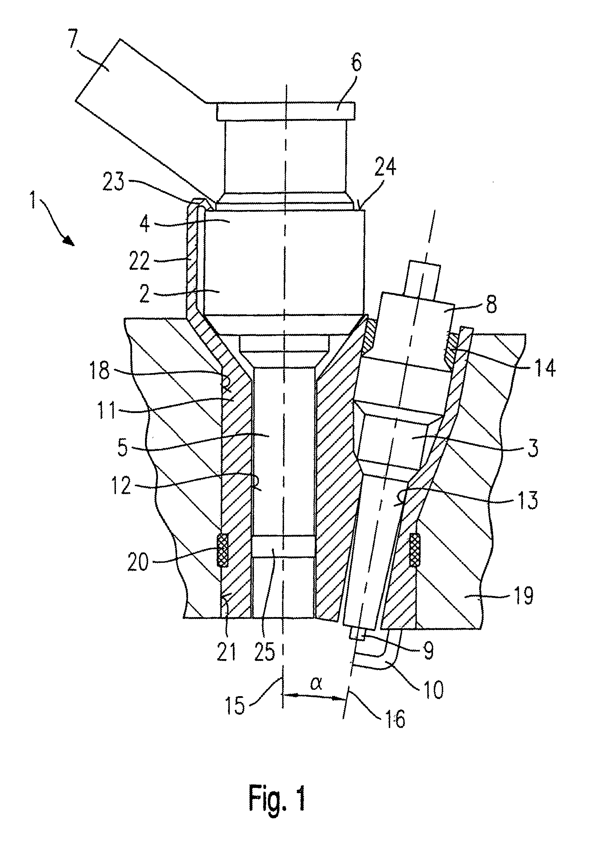

In Fig. 1 ist eine Brennstoffeinspritzventil-Zündkerze-Kombination 1 mit einem Brennstoffeinspritzventil 2 zum direkten Einspritzen von Brennstoff in einen Brennraum einer gemischverdichtenden, fremdgezündeten Brennkraftmaschine und einer Zündkerze 3 zum Zünden des in den Brennraum eingespritzten Brennstoffs entsprechend einem ersten Ausführungsbeispiel der Erfindung dargestellt.

Das Brennstoffeinspritzventil 2 weist dabei einen Gehäusekörper 4 und eine Düsenkörper 5 auf. Brennstoff wird dem Brennstoffeinspritzventil 2 über einen Zulaufstutzen 6 zugeführt, welcher an eine in Fig. 1 nicht weiter dargestellte Brennstoffverteilerleitung angeschlossen ist. Das Brennstoffeinspritzventil 2 verfügt über einen elektrischen Steckkontakt 7, welcher die Kontaktierung der in Fig. 1 nicht dargestellten Betätigungseinrichtung des Brennstoffeinspritzventils 2 ermöglicht.

Die Zündkerze 3 ist in üblicher Weise ausgebildet und besteht aus einem Kerzenstein 8, der vorzugsweise aus einem Keramikmaterial besteht, sowie einer darin angeordneten ersten Elektrode 9. Die erste Elektrode 9 ist elektrisch durch ein nicht weiter dargestelltes Zündgerät kontaktierbar. Mindestens eine zweite Elektrode 10 ist an einem Verbindungskörper 11, welcher das Brennstoffeinspritzventil 2 und die Zündkerze 3 erfindungsgemäß aufnimmt, ausgebildet.

Der Verbindungskörper 11 ist dabei so beschaffen, daß er einen einstückigen Verbindungskörper sowohl für das Brennstoffeinspritzventil 2 als auch für den Kerzenstein 8 der Zündkerze 3 bildet. Es weist dabei eine erste Aufnahmebohrung 12 für das Brennstoffeinspritzventil 2 und eine zweite Aufnahmebohrung 13 für den Kerzenstein 8 der Zündkerze 3 auf. Der Kerzenstein 8 der Zündkerze 3 und das Brennstoffeinspritzventil 2 sind mit dem Verbindungskörper 11 lösbar verbindbar. In dem in Fig. 1 dargestellten ersten Ausführungsbeispiel ist dabei der Kerzenstein 8 in eine Schraubhülse 14, welche formschlüssig mit dem Verbindungskörper 11 verbunden ist, eingeschraubt. Die Aufnahmebohrungen 12 und 13 für das Brennstoffeinspritzventil 2 und den Kerzenstein 8 der Zündkerze 3 sind dabei biaxial angeordnet und vorzugsweise unter einem beliebigen Winkel α, welcher zwischen einer Längsachse 15 des Brennstoffeinspritzventils 2 und einer Längsachse 16 des Kerzensteins 8 der Zündkerze 3 ausgebildet ist, geneigt. In den Verbindungskörper 11 ist vorzugsweise auch die zweite Elektrode 10 der Zündkerze 3 integriert.

Durch eine geeignete Wahl des Winkels α sowie der Geometrie eines Dichtsitzes und zumindest einer Abspritzöffnung des Brennstoffeinspritzventils 2 bzw. des Einspritzstrahls kann eine optimale Zündung der in den Brennraum eingespritzten Gemischwolke bei minimaler Thermoschockbelastung der Zündkerze 3 gewährleistet werden, wodurch der Brennstoffverbrauch und der Schadstoffausstoß der Brennkraftmaschine günstig beeinflußt werden.

Die Vorteile des erfindungsgemäß ausgestalteten Verbindungskörpers 11 gegenüber getrennten Bauteilen liegen dabei in der einfachen Montierbarkeit in einer Ausnehmung 18 eines Zylinderkopfes 19 der Brennkraftmaschine, der Möglichkeit des separaten Austauschs des Brennstoffeinspritzventils 2, des Kerzensteins 8 und der zweiten Elektrode 10 der Zündkerze 3 sowie in der Reduzierung des Einbauraums von Zündkerze 3 und Brennstoffeinspritzventil 2 im Zylinderkopf 19.

Die Vorteile gegenüber einer koaxialen Anordnung von Brennstoffeinspritzventil 2 und Zündkerze 3 liegen insbesondere in der erhöhten Haltbarkeit der Bauteile und einer Verbesserung des Kaltstartverhaltens der Brennkraftmaschine, da aufwendige Keramikummantelungen entfallen können. Dadurch werden auch die Herstellungs- und Servicekosten niedrig gehalten.

Die Ausnehmung 18 des Zylinderkopfes 19 kann dabei in Form einer Bohrung oder eines Langloches ausgeführt sein, welches durch den entsprechend geformte Verbindungskörper 11 ausgefüllt wird. Die Abdichtung gegen den Brennraum erfolgt mittels einer Dichtung 20, welche zwischen dem Verbindungskörper 11 und einer Wandung 21 des Zylinderkopfes 19 angeordnet ist. Die Dichtung 20 kann dabei beispielsweise torusförmig oder ringförmig mit einem beliebigen Querschnitt ausgeführt sein und aus einem Teflonmaterial bestehen.

Der Verbindungskörper 11 ist einteilig aus einem geeigneten Material ausgebildet und weist neben den Aufnahmebohrungen 12 und 13 für das Brennstoffeinspritzventil 2 und die Zündkerze 3 eine Befestigungsklammer 22 für das Brennstoffeinspritzventil 2 auf. Die Befestigungsklammer 22 erstreckt sich dabei an einer der Zündkerze 3 abgewandten Seite des Brennstoffeinspritzventils 2 entlang desselben und fixiert mittels eines vorkragenden Randes 23, der sich an einer um den Zulaufstutzen 6 umlaufenden Schulter 24 des Brennstoffeinspritzventils 2 abstützt, dieses in dem Verbindungskörper 11. Eine Dichtung 25 zwischen dem Düsenkörper 5 und dem Verbindungskörper 11 sorgt für die Dichtigkeit der Anordnung gegen den Brennraum.

Weiterhin ist die bereits weiter oben erwähnte Schraubhülse 14, in welche der Kerzenstein 8 der Zündkerze 3 einschraubbar ist, formschlüssig beispielsweise durch Einpressen in den Verbindungskörper 11 integriert.

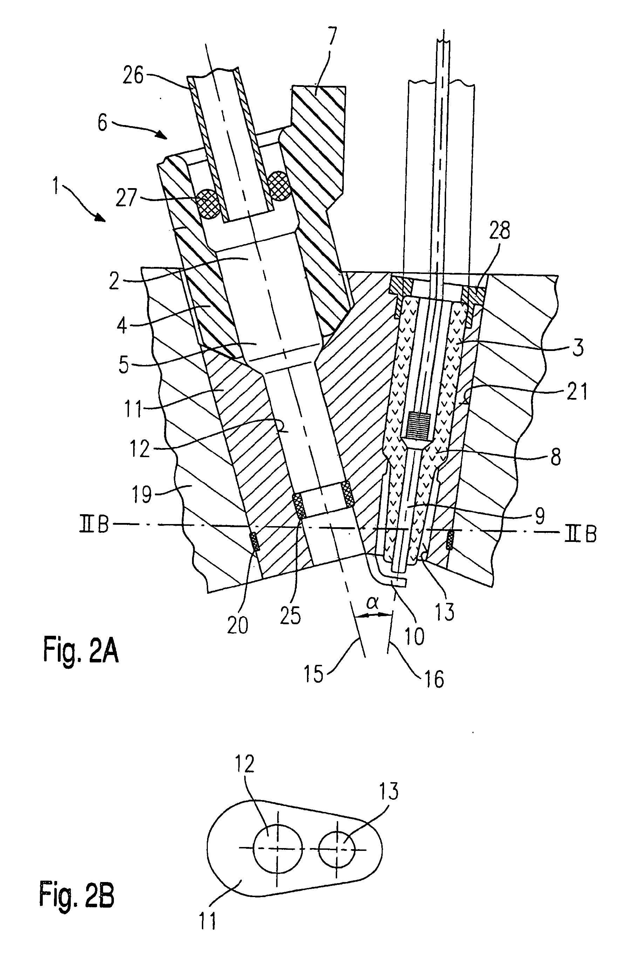

Fig. 2A zeigt in gleicher Darstellung wie Fig. 1 eine bekannte Brennstoffeinspritzventil-Zündkerze-Kombination 1. Mit Fig. 1 übereinstimmende Bauteile sind mit übereinstimmenden Bezugszeichen versehen. Auf eine Beschreibung bereits in Fig. 1 beschriebener Bauteile wird verzichtet.

Zur weiteren Reduzierung des Einbauraums auch bei größeren Winkeln α zwischen der Zündkerze 3 und dem Brennstoffeinspritzventil 2 kann das Brennstoffeinspritzventil 2 so gedreht werden, daß der elektrische Steckkontakt 7 auf der der Zündkerze 3 zugewandten Seite des Brennstoffeinspritzventils 2 liegt.

Der Verbindungskörper 11 ist im vorliegenden zweiten Ausführungsbeispiel nicht mehr mit einer Befestigungsklammer 22 für das Brennstoffeinspritzventil 2 versehen. Statt dessen kann das Brennstoffeinspritzventil 2 beispielsweise durch den von einer Brennstoffverteilerleitung 26, welche in den Zulaufstutzen 6 eingeschoben und mittels einer Dichtung 27 abgedichtet ist, ausgeübten Druck ortsfest gehalten werden. Dieses Ausführungsbeispiel eines Verbindungskörpers 11 für eine Brennstoffeinspritzventil-Zündkerze-Kombination 1 ist daher besonders einfach herstellbar.

Die Befestigung des Kerzensteins 8 der Zündkerze 3 erfolgt im vorliegenden Ausführungsbeispiel über einen Klemmring 28, welcher wie der in Fig. 1 beschriebene Schraubhülse 14 formschlüssig in den Verbindungskörper 11 integriert ist.

Fig. 2B zeigt in einer auszugsweisen Schnittdarstellung einen Schnitt durch die in Fig. 2A dargestellte Brennstoffeinspritzventil-Zündkerze-Kombination 1 entlang der Linie IIB-IIB in Fig. 2A.

Der Verbindungskörper 11 ist, wie aus Fig. 2B ersichtlich, asymmetrisch längsoval mit einer auf die Dicke des Brennstoffeinspritzventils 2 bzw. des Kerzensteins 8 abgestimmten gleichmäßigen Materialstärke. Dadurch ist der Verbindungskörper 11 stabil genug, um ohne Verformungen dem im Brennraum der Brennkraftmaschine herrschenden Druck in der Ausnehmung 21 standzuhalten. Die Form des Verbindungskörpers 11 und die korrespondierende Form der Ausnehmung 21 sind dabei frei wählbar und nur von der gewünschten Anordnung des Brennstoffeinspritzventils 2 und der Zündkerze 3 abhängig.

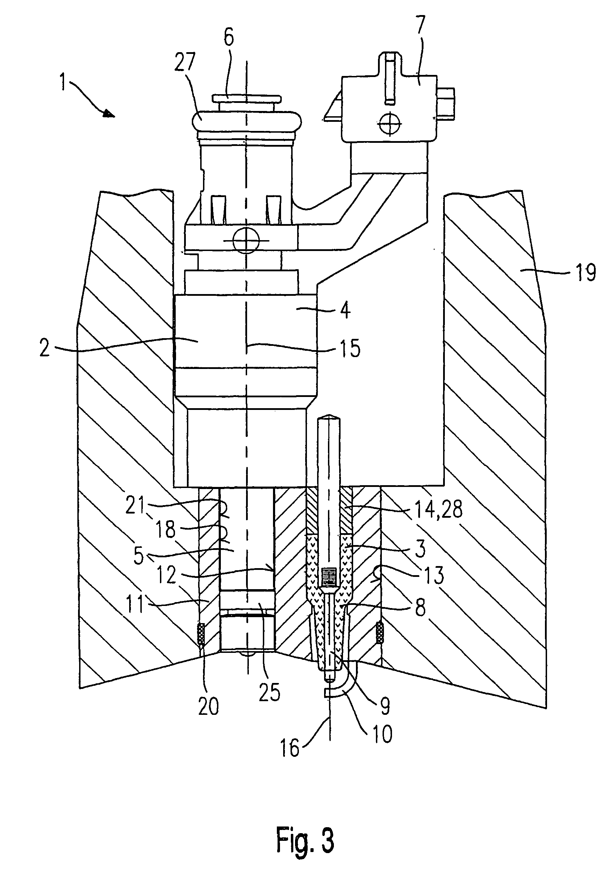

Fig. 3 zeigt ein zweites Ausführungsbeispiel einer erfindungsgemäß ausgestalteten Brennstoffeinspritzventil-Zündkerze-Kombination 1.

Das in Fig. 3 dargestellte Ausführungsbeispiel unterscheidet sich von den in Fig. 1 und 2A dargestellten Ausführungsbeispielen insbesondere dadurch, daß der zwischen dem Brennstoffeinspritzventil 2 und der Zündkerze 3 ausgebildete Winkel α 0° beträgt, so daß die Zündkerze 3 und das Brennstoffeinspritzventil 2 parallel zueinander in den Verbindungskörper 11 eingebaut sind. Dies erlaubt einen besonders kleinen Verbindungskörper 11 und dadurch eine besonders platzsparende Einbaulage der Brennstoffeinspritzventil-Zündkerze-Kombination 1 im Zylinderkopf 19. Die Ausbildung der Gemischwolke und die Abspritzrichtung zu den Elektroden 9 und 10 der Zündkerze 3 kann über eine entsprechende Gestaltung der Geometrie des Dichtsitzes und der Abspritzöffnungen des Brennstoffeinspritzventils 2 beeinflußt werden.

Die Erfindung ist nicht auf die dargestellten Ausführungsbeispiele beschränkt und für beliebige Bauweisen von Brennstoffeinspritzventilen und beliebige Neigungswinkel von Zündkerze 3 und Brennstoffeinspritzventil 2 zueinander anwendbar.

## Patentansprüche

1. Brennstoffeinspritzventil-Zündkerze-Kombination (1) mit einem Brennstoffeinspritzventil (2) zum direkten Einspritzen von Brennstoff in einen Brennraum einer Brennkraftmaschine und einer Zündkerze (3) zum Zünden des in den Brennraum eingespritzten Brennstoffs, mit einem Kerzenstein (8) der eine erste Elektrode (9) aufweist, und mit einer zweiten Elektrode (10), wobei das Brennstoffeinspritzventil (2) und der Kerzenstein(8) der Zündkerze (3) biaxial versetzt in jeweils einer Aufnahmebohrung (12; 13) eines in eine Ausnehmung (18) eines Zylinderkopfes (19) einsetzbaren gemeinsamen Verbindungskörpers (11) angeordnet sind,
**dadurch gekennzeichnet,**
**daß** der Kerzenstein (8) und das Brennstoffeinspritzventil (2) mit dem Verbindungskörper (11) lösbar verbunden sind, das Brennstoffeinspritzventil (2) mittels einer an einer der Zündkerze abgewandten Seite sich erstreckenden Befestigungsklammer (22) in dem Verbindungskörper (11) fixiert ist und die Befestigungsklammer (22) einstückig mit dem Verbindungskörper (11) ausgebildet ist.

2. Brennstoffeinspritzventil-Zündkerze-Kombination nach Anspruch 1,
**dadurch gekennzeichnet,**
**daß** der Verbindungskörper (11) mittels einer Dichtung (20) gegen den Zylinderkopf (19) der Brennkraftmaschine abgedichtet ist.

3. Brennstoffeinspritzventil-Zündkerze-Kombination nach Anspruch 1 oder 2,
**dadurch gekennzeichnet,**
**daß** eine Längsachse (12) des Brennstoffeinspritzventils (2) gegenüber einer Längsachse (13) des Kerzensteins (8) der Zündkerze (3) unter einem Winkel (α) geneigt ist.

4. Brennstoffeinspritzventil-Zündkerze-Kombination nach einem der Ansprüche 1 oder 2,
**dadurch gekennzeichnet,**
**daß** eine Längsachse (12) des Brennstoffeinspritzventils (2) parallel zu einer Längsachse (13) des Kerzensteins (8) der Zündkerze (3) ist.

5. Brennstoffeinspritzventil-Zündkerze-Kombination nach einem der vorhergehenden Ansprüche,
**dadurch gekennzeichnet,**
**daß** der Kerzenstein (8) mittels einer Schraubhülse (14) in dem Verbindungskörper (11) fixiert ist.

6. Brennstoffeinspritzventil-Zündkerze-Kombination nach einem der vorhergehenden Ansprüche 1 bis 4,
**dadurch gekennzeichnet,**
**daß** der Kerzenstein (8) mittels einer Klemmhülse (28) am Verbindungskörper (11) fixiert ist.

## Claims

1. Fuel-injection-valve/spark-plug combination (1) having a fuel injection valve (2) for directly injecting fuel into a combustion chamber of an internal combustion engine and having a spark plug (3) for igniting the fuel which is injected into the combustion chamber, having a plug insulator (8) which has a first electrode (9), and having a second electrode (10), with the fuel injection valve (2) and the plug insulator (8) of the spark plug (3) being arranged biaxially offset in in each case one holding bore (12; 13) of a common connecting body (11) which can be inserted into a recess (18) of a cylinder head (19),
**characterized**
**in that** the plug insulator (8) and the fuel injection valve (2) are detachably connected to the connecting body (11), the fuel injection valve (2) is fixed in the connecting body (11) by means of a fastening clamp (22) which extends on a side facing away from the spark plug, and the fastening clamp (22) is formed in one piece with the connecting body (11).

2. Fuel-injection-valve/spark-plug combination according to Claim 1,
**characterized**
**in that** the connecting body (11) is sealed off with respect to the cylinder head (19) of the internal combustion engine by means of a seal (20).

3. Fuel-injection-valve/spark-plug combination according to Claim 1 or 2,
**characterized**
**in that** a longitudinal axis (12) of the fuel injection valve (2) is inclined with respect to a longitudinal axis (13) of the plug insulator (8) of the spark plug (3) by an angle (a).

4. Fuel-injection-valve/spark-plug combination according to one of Claims 1 or 2,
**characterized**
**in that** a longitudinal axis (12) of the fuel injection valve (2) is parallel to a longitudinal axis (13) of the plug insulator (8) of the spark plug (3).

5. Fuel-injection-valve/spark-plug combination according to one of the preceding claims,
**characterized**
**in that** the plug insulator (8) is fixed in the connecting body (11) by means of a screw sleeve (14).

6. Fuel-injection-valve/spark-plug combination according to one of the preceding Claims 1 to 4,
**characterized**
**in that** the plug insulator (8) is fixed to the connecting body (11) by means of a clamping sleeve (28).

## Revendications

1. Combinaison (1) d'une soupape d'injection de carburant et d'une bougie d'allumage, comprenant une soupape d'injection de carburant (2) pour l'injection directe de carburant dans une chambre de combustion d'un moteur à combustion interne, et une bougie d'allumage (3) pour l'allumage du carburant injecté dans la chambre de combustion, avec un isolateur de bougie (8) qui présente une première électrode (9) et avec une deuxième électrode (10), la soupape d'injection de carburant (2) et l'isolateur de bougie (8) de la bougie d'allumage (3) étant disposés de manière décalée biaxialement dans un alésage de réception respectif (12 ; 13) d'un corps de connexion (11) commun pouvant être inséré dans un évidement (18) d'une culasse de cylindre (19),
**caractérisée en ce que**
l'isolateur de bougie (8) et la soupape d'injection de carburant (2) sont connectés de manière amovible au corps de connexion (11), la soupape d'injection de carburant (2) est fixée dans le corps de connexion (11) au moyen d'une pince de fixation (22) s'étendant sur un côté opposé à la bougie d'allumage et la pince de fixation (22) est réalisée d'une seule pièce avec le corps de connexion (11).

2. Combinaison d'une soupape d'injection de carburant et d'une bougie d'allumage selon la revendication 1,
**caractérisée en ce que**
le corps de connexion (11) est scellé au moyen d'un joint d'étanchéité (20) contre la culasse de cylindre (19) du moteur à combustion interne.

3. Combinaison d'une soupape d'injection de carburant et d'une bougie d'allumage selon la revendication 1 ou 2,
**caractérisée en ce**
**qu'**un axe longitudinal (12) de la soupape d'injection de carburant (2) est incliné par rapport à un axe longitudinal (13) de l'isolateur de bougie (8) de la bougie (3) suivant un angle (α).

4. Combinaison d'une soupape d'injection de carburant et d'une bougie d'allumage selon la revendication 1 ou 2,
**caractérisée en ce**
**qu'**un axe longitudinal (12) de la soupape d'injection de carburant (2) est parallèle à un axe longitudinal (13) de l'isolateur de bougie (8) de la bougie d'allumage (3).

5. Combinaison d'une soupape d'injection de carburant et d'une bougie d'allumage selon l'une quelconque des revendications précédentes,
**caractérisée en ce que**
l'isolateur de bougie (8) est fixé dans le corps de connexion (11) au moyen d'une douille filetée (14).

6. Combinaison d'une soupape d'injection de carburant et d'une bougie d'allumage selon l'une quelconque des revendications précédentes 1 à 4,
**caractérisée en ce que**
l'isolateur de bougie (8) est fixé au corps de connexion (11) au moyen d'une douille de serrage (28).
